# EUROPÄISCHE PATENTSCHRIFT

(11) **EP 1 083 359 B1**
(45) Veröffentlichungstag und Bekanntmachung des Hinweises auf die Patenterteilung: **23.05.2007**
(21) Anmeldenummer: 00117889.6
(22) Anmeldetag: 19.08.2000
(51) Int. Cl.: F16D 65/847, F16D 55/224, B60T 1/06, B60B 35/00, B60T 5/00

(54) **Aerodynamisches Radlagergehäuse**
Aerodynamic wheel bearing housing
Logement de palier de roue aérodynamique

(30) Priorität: 11.09.1999 DE 19943536
(43) Veröffentlichungstag der Anmeldung: 14.03.2001
(73) Patentinhaber: Dr.Ing. h.c.F. Porsche Aktiengesellschaft, 70435 Stuttgart (DE)
(72) Erfinder: Toman, Vilem, 75446 Wiernsheim (DE); Preiss, Michael, 71665 Vaihingen (DE); Jost, Bernhard, 71292 Friolzheim (DE); Wiegand, Thomas, Dr., 71277 Rutesheim (DE)

(56) Entgegenhaltungen:
- EP-A- 1 078 782
- FR-A- 2 397 298
- US-A- 4 232 763
- US-A- 4 901 826
- US-A- 4 979 597
- PATENT ABSTRACTS OF JAPAN vol. 016, no. 471 (M-1318), 30. September 1992 (1992-09-30) & JP 04 169309 A (NISSAN MOTOR CO LTD), 17. Juni 1992 (1992-06-17)

## Beschreibung

Die Erfindung betrifft ein Radlagergehäuse zur Führung eines Rades eines Fahrzeuges nach dem Oberbegriff des Patentanspruches 1.

Radlagergehäuse an Fahrzeugen dienen ganz allgemein zur Verbindung eines Rades mit einem Fahrzeugaufbau und zur Führung des Rades. Bei angetriebenen Rädern sind darüber hinaus Lagerstellen für eine Antriebswelle vorgesehen.

Aus der DE 28 30 450 C3 ist ein Führungslenker für ein Fahrzeugrad bekannt geworden, bei dem der Führungslenker hohl ausgebildet ist. Der Hohlraum des Lenkers ist mit zwei Öffnungen versehen. Die erste Öffnung ist nahe einer Bremseinrichtung angeordnet, die sich radial innerhalb des Rades befindet. Eine zweite Öffnung ist in Fahrtrichtung ausgerichtet, so daß der Fahrtwind durch den hohlen Radführungslenker auf die Bremse geführt ist. Soll diese Anordnung in Zusammenhang mit einem Querlenker verwendet werden, so soll an der Eintrittsöffnung eine schaufelförmige Ablenkfläche vorgesehen sein, um den Fahrtwind in Richtung der Eintrittsöffnung zu lenken. Nachteilig bei dieser bekannten Lösung ist die aufwendige Fertigung des Hohlraumes.

Die EP 1 078 782 A bzw. US 4 232 763 A offenbart ein Radlagergehäuse gemäß dem Oberbegriff des Anspruchs 1.

Ausgehend von diesem Stand der Technik ist es daher Aufgabe der Erfindung, eine Radführungseinrichtung zu schaffen, die Einrichtungen zur Luftführung bei geringerem baulichem Aufwand aufweist.

Diese Aufgabe wird erfindungsgemäß mit den Merkmalen des Patentanspruchs 1 gelöst. Der Erfindung liegt die Erkenntnis zugrunde, daß es ausreicht, einen eintretenden Luftstrom durch Luftführungselemente in Richtung einer Bremseinrichtung zu führen. Gegenüber bekannten Lösungen weist die Erfindung den Vorteil auf, daß im Radführungselement - hier einem Radlagergehäuse - kein durchgehender geschlossener Kanal vorgesehen werden muß und daß die Herstellung einer außenseitigen Ausformung bedeutend einfacher ist.

Vorteilhafte Weiterbildungen der Erfindung sind in den Unteransprüchen beschrieben. So wird vorgeschlagen, das Luftführungselement als offenen Kanal auszubilden. Eine solche Ausbildung ist deutlich einfacher als eine geschlossene Kanalführung herzustellen und weist im wesentlichen dieselbe Wirkung auf.

Weiter wird vorgeschlagen, Anformungen, die am Radlagergehäuse als Mittel zur Verbindung mit einem Fahrzeugaufbau vorgesehen sind, bereichsweise zur Bildung einer Wandung des Luftführungselementes mit heranzuziehen. Durch diese Maßnahme können Querschnitt und Führungslänge des Luftführungselementes weiter vergrößert werden. Hierzu wird konkret vorgeschlagen, die Anformungen gewölbt auszuführen und so zu gestalten, daß sie an ihrem Ansatzpunkt vom Rad wegführen, d.h. in der Regel quer zur Fahrtrichtung liegen.

Die Erfindung ist nachstehend anhand eines in den Figuren dargestellten Ausführungsbeispieles näher dargestellt.
Es zeigen
- Fig. 1: eine Übersicht über ein erfindungsgemäßes Radlagergehäuse im eingebauten Zustand,
- Fig. 2: die Darstellung nach Fig. 1, jedoch aus einem anderen Blickwinkel,
- Fig. 3: eine Draufsicht auf das Radlagergehäuse im eingebauten Zustand,
- Fig. 4: eine Seitenansicht des Radlagergehäuses im eingebauten Zustand mit Aufbrüchen,
- Fig. 5: das Radlagergehäuse nach Fig. 1, jedoch ohne Anbauteile, und
- Fig. 6: das Radlagergehäuse nach Fig. 4, jedoch ohne Anbauteile

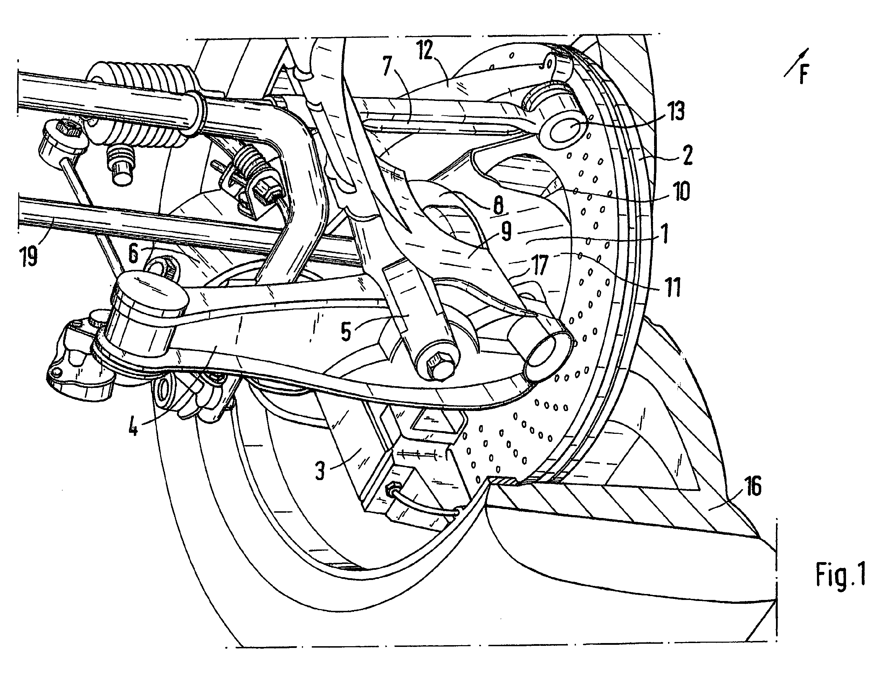

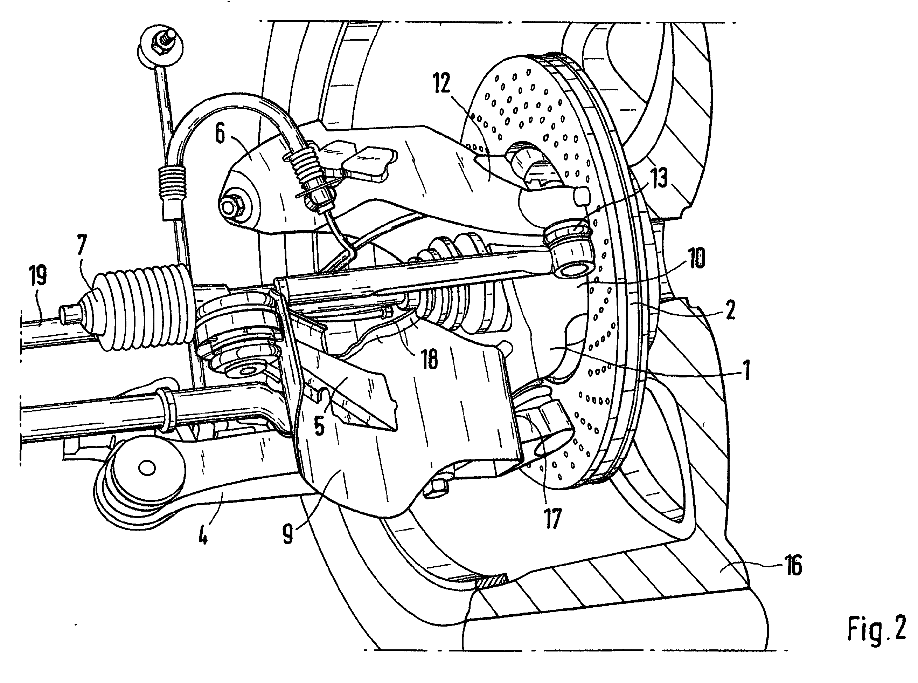

Das in Fig. 1 und Fig. 2 gezeigte Radlagergehäuse 1 ist an einer Vorderachse eines Kraftfahrzeuges angeordnet. Innerhalb eines Rades 16 ist als Bremseinrichtung eine innenbelüftete Bremsscheibe 2 angeordnet, die mit einem am Radlagergehäuse 1 befestigten Bremssattel 3 zusammenwirkt. Mit einem nicht gezeigten Fahrzeugaufbau ist das Radlagergehäuse 1 über einen Querlenker 4, einen Längslenker 5 und einer Aufnahme 6 für ein Federbein schwenkbar verbunden. Eine Spurstange 7 dient zur Einstellung der Schwenkstellung des Radlagergehäuses 1 in bezug auf den Fahrzeugaufbau. Eine Antriebswelle 19 ist in einer zentralen Öffnung 8 des Radlagergehäuses gehalten und treibt das Rad 16 an.

Am Längslenker 5 ist eine Leitschaufel 9 gehalten, deren vorderes Ende sich in etwa in Fahrtrichtung F erstreckt und deren hinteres Ende 17 in Richtung der Bremsscheibe 2 weist. Eine solche Leitschaufel ist beispielsweise bereits aus der DE 38 03 801 A1 bekannt.

Das Radlagergehäuse 1 ist in einem in Fahrtrichtung F weisenden Bereich als Luftführungselement ausgebildet. Hierzu sind am Radlagergehäuse 1 in einem an einen Bereich 10 angrenzenden Oberflächenbereich an einem zylindrischen Grundgehäuse 11 keine weiteren Anformungen vorgesehen. Hiermit ergibt sich zwischen einer Innenkante der Bremsscheibe 2 und dem zylindrischen Grundgehäuse 11 der kreisringförmige Bereich 10, durch den Luft an die Innenseite der Bremsscheibe 2 zu dort liegenden Zufuhröffnungen der Innenbelüftung der Bremsscheibe 2 gelangen kann. Die Leitschaufel 9 ist hierbei so angeordnet, daß sie aus der Fahrtrichtung F strömende Luft in den Bereich 10 lenkt. Das zylindrische Grundelement 11 wirkt daher in Verlängerung der Leitschaufel 9 als Luftführungselement.

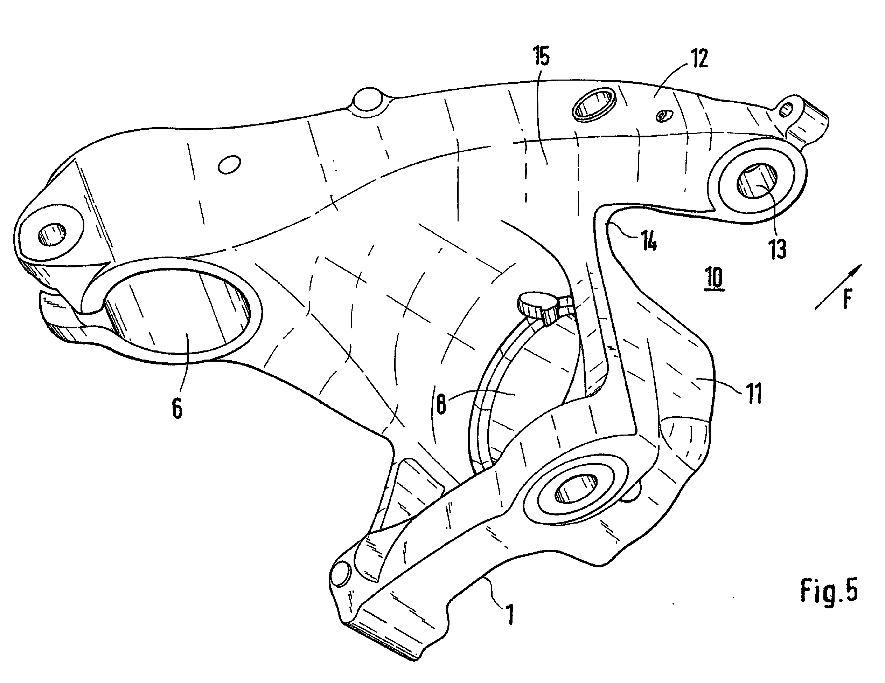

Zusätzlich ist eine Anformung 12, die am Radlagergehäuse 1 zur Anbindung an die Spurstange 7 vorgesehen ist, so ausgeformt, daß sie sich an ihrem Ansatzpunkt 15 am Radlagergehäuse 1 (vgl. Fig. 5) zunächst quer zur Fahrtrichtung F, d.h. vom Rad 16 weg, erstreckt, um dann in einem Bogen 14 zu einem Anlenkpunkt 13 für die Spurstange 7 zu führen. Die durch den Bogen 14 gebildete Innenseite der Anformung 12 bildet eine Fortsetzung des durch das zylindrische Grundgehäuse 11 gebildeten Luftführungselementes und eine Begrenzug des Bereiches 10.

Während in Fig. 1 das Radlagergehäuse 1 von innen-unten gezeigt ist, zeigt Fig. 2 das Radlagergehäuse 1 im wesentlichen von innen-vorn.

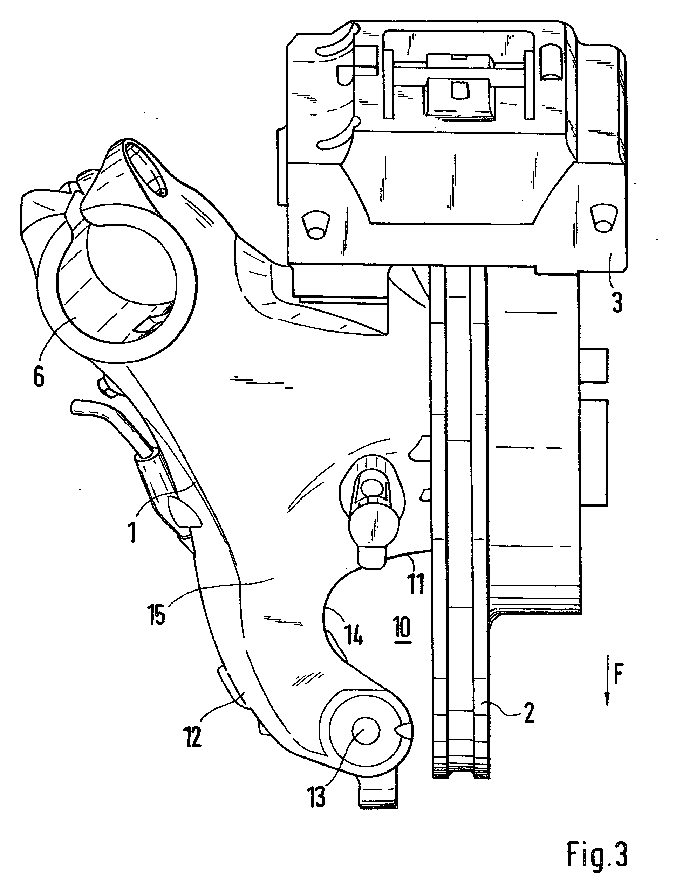

Fig. 3 zeigt eine Draufsicht auf das Radlagergehäuse 1 zusammen mit der Bremsscheibe 2 und dem Bremssattel 3. Hier ist der Bereich 10, der auf der einen Seite von der Bremsscheibe 2 und auf der anderen Seite von der Wölbung 14 der Anformung 12 begrenzt wird, deutlich zu erkennen.

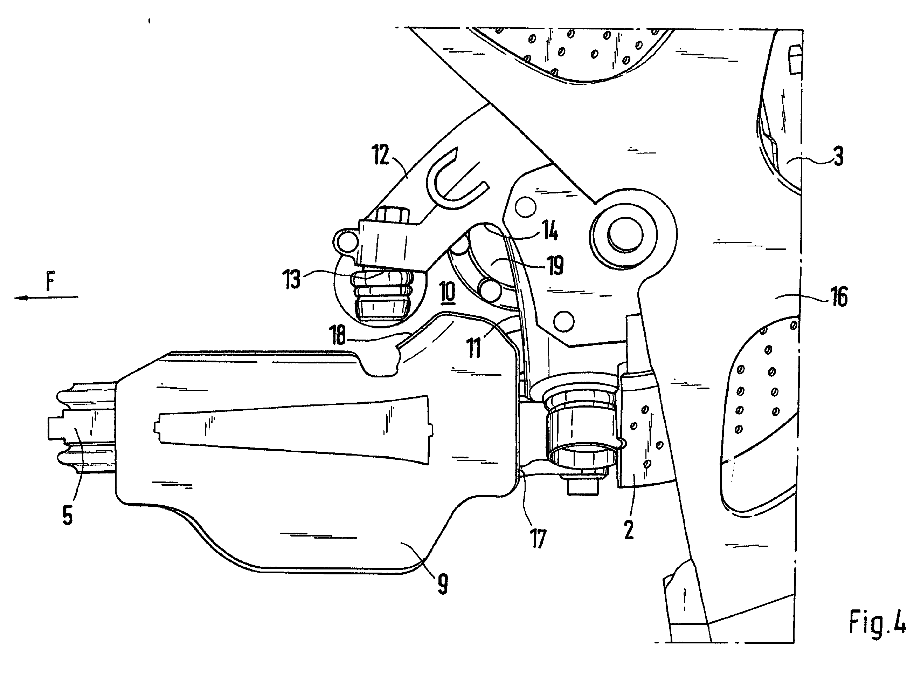

Fig. 4 zeigt eine seitliche Ansicht auf das Radlagergehäuse 1 im eingebauten Zustand, wobei ein Rad 16 sowie die Bremsscheibe 2 in dem der Fahrtrichtung F zugewandten Bereich zur besseren Darstellung aufgeschnitten wurden. Deutlich sichtbar ist, daß die Hinterkante 17 der Leitschaufel 9 unmittelbar dem zylindrischen Grundgehäuse 11 zugewandt ist. Ein an der Oberseite der Leitschaufel 9 angeordnetes Leitelement 18 ist darüber hinaus so ausgerichtet, daß ein Teil des von der Leitschaufel 9 kommenden Luftstromes in die Wölbung 14 hineingeführt ist. Im Zusammenspiel zwischen der Leitschaufel 9 und der Außenseite des Radlagergehäuses 1, hier dem aus Grundgehäuse 11 und Anformung 12 gebildeten Bereich 10, wird somit der Bereich 10 über seinen gesamten Querschnitt angeströmt. Dies trägt weiter zur Verbesserung der Luftzufuhr zur Bremsscheibe bei, da nun die Innenseiten der Luftkanäle über einen größeren Drehwinkel und damit über eine längere Zeit hinweg mit frischer Kühlluft versorgt werden.

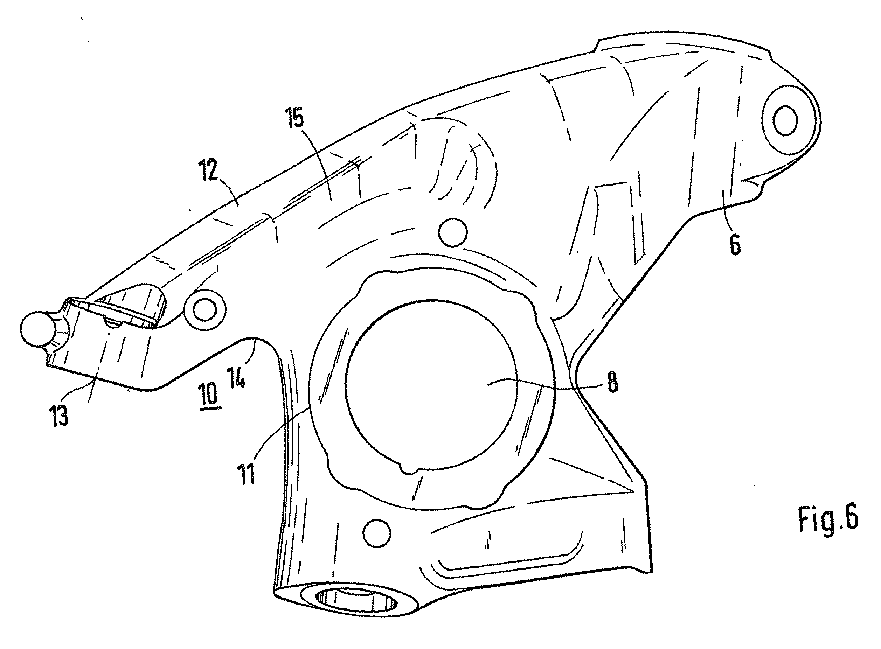

In Fig. 5 ist das Radlagergehäuse 1 nochmals in Alleinstellung dargestellt. Deutlich erkennbar ist der Bereich 10, der einen offenen Kanal bildet, der sich ausgehend vom Grundgehäuse 11 zur Wölbung 14 der Anformung 12 erstreckt. Fig. 6 zeigt das Radlagergehäuse in Alleinstelluung in der Seitenansicht nach Fig. 4.

## Patentansprüche

1. Radlagergehäuse (1) zur Führung eines Rades (16) eines Fahrzeugs, wobei das am Radlagergehäuse(1) gelagerte Rad (16) mit einer Bremseinrichtung (2) versehen ist, wobei die Außenseite des Radlagergehäuses (1) zumindest bereichsweise als Luftführungselement (11, 14) ausgebildet ist, **dadurch gekennzeichnet, dass** das Luftführungselement (11, 14) ein kreisringförmiger offener Kanal ist, und dass zur Verbindung mit einem Fahrzeugaufbau am Radlagergehäuse (1) Anformungen (12) vorgesehen sind, die bereichsweise eine Wandung (14) des Luftführungselements (11, 14) bilden und dass an einem mit dem Radlagergehäuses (1) verbundenen Radlenker (5) eine Leitschaufel (9) angeordnet ist, die einen Luftstrom in Richtung des kreisringförmigen offenen Kanals im Luftführungselement (11, 14) am Radlagergehäuse lenkt.

2. Radlagergehäuse nach Anspruch 1, **dadurch gekennzeichnet, dass** die Anformungen (12) eine gewölbte Form aufweisen und an ihrem Ansatzpunkt (15) vom Rad (16) wegführend gestaltet sind.

## Claims

1. A wheel-bearing housing (1) for guiding a wheel (16) of a vehicle, wherein the wheel (16) mounted on the wheel-bearing housing (1) is provided with a braking device (2), wherein the outside of the wheel-bearing housing (1) is formed at least in part as an air guiding member (11, 14), **characterised in that** the air guiding member (11, 14) is an annular open channel, and **in that**, for connection to a vehicle body, mouldings (12) are provided on the wheel-bearing housing (1) and in part form a wall (14) of the air guiding member (11, 14), and **in that** a guide vane (9) is arranged on a wheel link (5) connected to the wheel-bearing housing (1) and deflects an air flow in the direction of the annular open channel in the air guiding member (11, 14) on the wheel-bearing housing.

2. A wheel-bearing housing according to claim 1, **characterised in that** the mouldings (12) have a curved shape and, at their attachment point (15), are formed so as to extend away from the wheel (16).

## Revendications

1. Logement de palier (1) pour le guidage d'une roue (16) d'un véhicule, la roue (16) logée sur le logement de palier de roue (1) étant munie d'un système de freinage (2), le côté extérieur du logement de palier de roue (1) étant conçu au moins par endroit comme un élément de guidage d'air (11, 14), **caractérisé en ce que** l'élément de guidage d'air (11, 14) est un canal ouvert de forme annulaire circulaire et **en ce que**, pour la liaison avec une carrosserie de véhicule, il est prévu sur le logement de palier de roue (1) des parties formées (12) qui forment par endroits une paroi (14) de l'élément de guidage d'air (11, 14) et **en ce que** sur un bras oscillant de roue (5) relié au logement de palier de roue (1) est disposée une aube directrice (9) qui guide un flux d'air en direction du canal ouvert de forme annulaire circulaire dans l'élément de guidage d'air (11, 14) sur le logement de palier de roue.

2. Logement de palier de roue selon la revendication 1, **caractérisé en ce que** les parties formées (12) présentent une forme incurvée et sont conçues sur leur point de départ (15) à partir de la roue (16).
